# EUROPEAN PATENT APPLICATION

(11) **EP 1 732 298 A2**
(43) Date of publication of application: **13.12.2006**
(21) Application number: 06010495.7
(22) Date of filing: 22.05.2006
(51) Int. Cl.: H04M 1/725, H04M 1/57

(54) **Wireless terminal for switching between write mode and image-attach mode upon rotating a folder and method thereof**

(30) Priority: 07.06.2005 KR 20050048289
(71) Applicant: Samsung Electronics Co., Ltd., Suwon-si, Gyeonggi-Do (KR)
(72) Inventor: Kim, Hwan, Yeongtong-gu, Suwon-si, Gyeonggi-do (KR); Lim, Chae-Whan, Yeongtong-gu, Suwon-si, Gyeonggi-do (KR)
(74) Representative: Lang, Johannes

(57) **Abstract**

An apparatus and method are provided for attaching an image to a message/email sent by a wireless terminal such as a cellular or mobile phone comprising a main body, a folder pivotally provided on the main body so as to be turned either to a first lengthwise position at which the folder is arranged parallel with the main body or to a second crosswise position at which the folder is arranged crosswise to the main body, and a display provided in the folder. The method comprises the steps of detecting the rotational position of the folder in message/email write mode, and switching the wireless terminal to image attach mode when the folder is turned to the second crosswise position. The message/email write mode is enabled when the folder is in the first lengthwise position.

## Description

### BACKGROUND OF THE INVENTION

### Field of the Invention:

The present invention relates to an apparatus and method for attaching an image to a message or email sent by a wireless terminal such as a cellular or mobile phone. More particularly, the present invention relates to a method of attaching an image to a message or Email sent by a wireless terminal comprising a main body, a folder pivotally provided on the main body capable of being in a first lengthwise position where the folder is arranged parallel with the main body or to a second crosswise position where the folder is arranged crosswise to the main body, and a display provided in the folder.

### Description of the related art:

Presently, wireless terminals are developed with structures to facilitate high-speed data transmission in addition to conventional voice communication. Namely, the mobile communications network according to International Mobile Telecommunications-2000 (IMT 2000) specifications may facilitate high-speed data communication in addition to voice communication with the wireless mobile terminal. The data transmitted through the wireless terminal in data communication may include packet data and video data. The wireless terminal has also been provided with a camera and TV receiver to add a video displaying function. This function facilitates the display or transmittal of moving or still pictures taken by the camera, and the display of received TV signals.

The image data taken may be attached to a message or email sent by the wireless terminal, or stored into a photo phone book of the wireless terminal. Conventionally, the wireless terminal had to be switched to an image attach mode by entering a prescribed key in order to attach the image data to a message. Once the wireless terminal was switched to the image attach mode, the image to be sent was taken by using the camera or selected from the images stored in the wireless terminal.

Accordingly, there is a need for an improved method of attaching image data to a message without manually switching the wireless terminal from the message/Email write mode to the image attach mode.

### SUMMARY OF THE INVENTION

An aspect of exemplary embodiments of the present invention is to address at least the above problems and/or disadvantages and to provide at least the advantages described below.

It is an object of exemplary embodiments of the present invention to provide a method to automatically switch the wireless terminal from a message/email write mode for writing a message or email to an image attach mode for attaching an image to the message or email by turning the folder.

According to an aspect of an exemplary embodiment of the present invention, a method to switch the wireless terminal from a message/email write mode for writing a message or email to an image attach mode for attaching an image to the message or email is provided. The rotational position of the folder in the message/email write mode is detected and the wireless terminal is switched to the image attach mode when the folder is turned to the second crosswise position. The message/email write mode is enabled when the folder is in the first lengthwise position.

### BRIEF DESCRIPTION OF THE ATTACHED DRAWINGS

The above and other exemplary objects, features, and advantages of certain exemplary embodiments of the present invention will be more apparent from the following description taken in conjunction with the accompanying drawings, in which:
Fig. 1 is a block diagram for illustrating a functional structure of a wireless terminal according to an exemplary embodiment of the present invention; and
Figs. 2A and 2B are flowcharts illustrating a method of switching the wireless terminal to the image attach mode by turning the folder according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

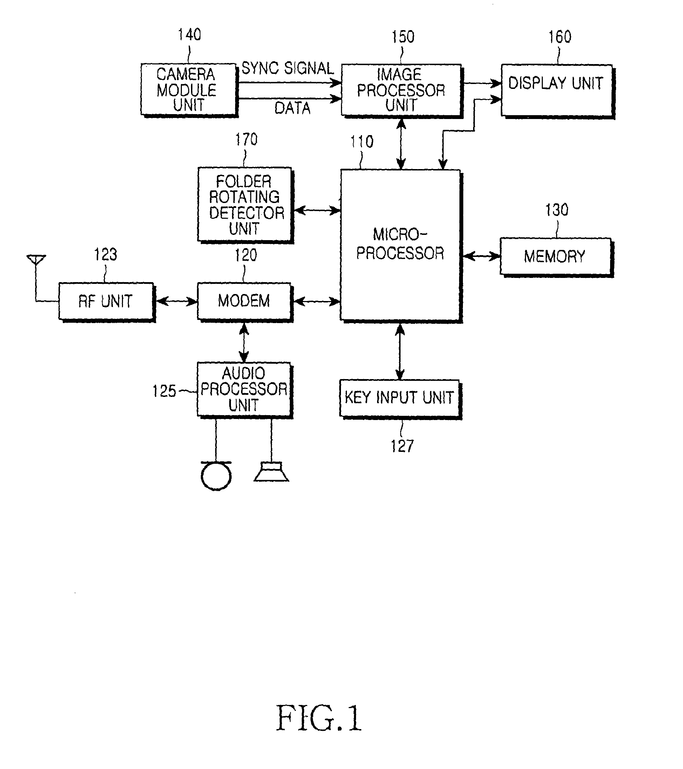

Referring to Fig. 1, a radio frequency (RF) unit 123 for wireless communication comprises an RF transmitter (not shown) for modulating and amplifying the frequency of a transmitted signal and an RF receiver (not shown) for demodulating and for low-noise amplifying a received signal. A modem 120 transforms the digital signals from a microprocessor 110 into the corresponding analog signals delivered to the RF unit 123. The modem 120 transforms the analog signals from the RF unit 123 into the corresponding digital signals delivered to an audio processor unit 125 or the microprocessor 110. The audio processor unit 125 comprises a data codec for processing packet data and an audio codec for processing audio signals such as voice signals. The audio processor unit 125 converts the digital audio signals from the modem 120 into the corresponding analog signals delivered to a speaker. Alternatively, the audio processor unit 124 converts the analog audio signals from a microphone into the corresponding digital signals delivered to the modem 120. The audio processor unit may be a separate unit or a built-in element of the microprocessor 110.

A memory 130 comprises a program memory and a data memory. The program memory stores the programs for controlling the general operations of the wireless terminal including the programs for controlling the automatic switching of the wireless terminal to the image attach mode by turning the folder according to an exemplary embodiment of the present invention. Meanwhile, the data memory temporarily stores the data generated during execution of the programs.

The microprocessor 110 controls all the functions of the wireless terminal and may be designed to include the modem 120 and the audio processor unit. According to an exemplary embodiment of the present invention, the microprocessor 110 controls the wireless terminal to automatically switch to the image attach mode when the user has turned the folder to the second crosswise position.

The folder rotating detector unit 170 generates a first or second position detection signal when the folder is in a first lengthwise or a second crosswise position. The microprocessor 110 switches the wireless terminal to the message/email write mode or the image attach mode in response to the first or second position detection signal. If the folder is returned from the second crosswise position to the first lengthwise position, the microprocessor 110 controls the wireless terminal to switch to the message/email write mode. Therefore, the message or email written in the message/email write mode may be transmitted or stored together with the image attached in the image attach mode, or the message or email continues to be written.

A phone book may be written in the message/email write mode and stored in the wireless terminal. After writing the phone book, the folder is turned to the second crosswise position. The folder rotating detector unit 170 generates the second position detection signal applied to the microprocessor 110 to control the wireless terminal to automatically switch to the image attach mode, so that an image may be attached to the phone book.

Where the folder is turned to the first lengthwise position from the image attach mode, the folder rotating detector unit 170 generates the first position detection signal. The first position detection signal is applied to the microprocessor 110 to control the wireless terminal to switch to the message/email or phone book write mode, so that the phone book may be stored together with the attached image, or the writing of the phone book is resumed.

A camera module unit 140 comprises a camera sensor and a signal processor. The camera sensor converts the optical signals of a captured image into the corresponding electrical signals and the signal processor converts the analog electrical signals from the camera sensor into the corresponding digital data. The camera sensor may be a CCD (Charge-Coupled Device) sensor, and the signal processor a DSP (Digital Signal Processor). The camera sensor and the signal processor may be integrally combined or separately formed.

An image processor unit 150 processes the video signals from the camera module unit 140 by frames to generate the frame video data fitting the characteristics and size of a display 160. The image processor unit 150 includes a video codec to compress the frame video data or decompress the compressed frame video data according to a prescribed process. The video codec may be JPEG, MPEG4, or Wavelet, among others. The image processor unit 150 is provided with the OSD (On Screen Display) function to generate the OSD data according to the screen size under the control of the microprocessor 110.

The display 160 displays the video signals from the image processor unit 150 and the user's data transferred from the microprocessor 160. The display 160 may comprise an LCD device, LCD controller, and memory for storing the video data. The LCD device may be formed with a touch screen mode to serve as an input device. The display 160 displays a switching message to represent the image attach mode by turning the folder. The display 160 also displays a selection menu for selecting transmission/storing data or resuming the write mode if the folder is returned to the first lengthwise position from the image attach mode. A key input device 127 includes the keys for inputting information on numbers and characters and the keys for setting various functions.

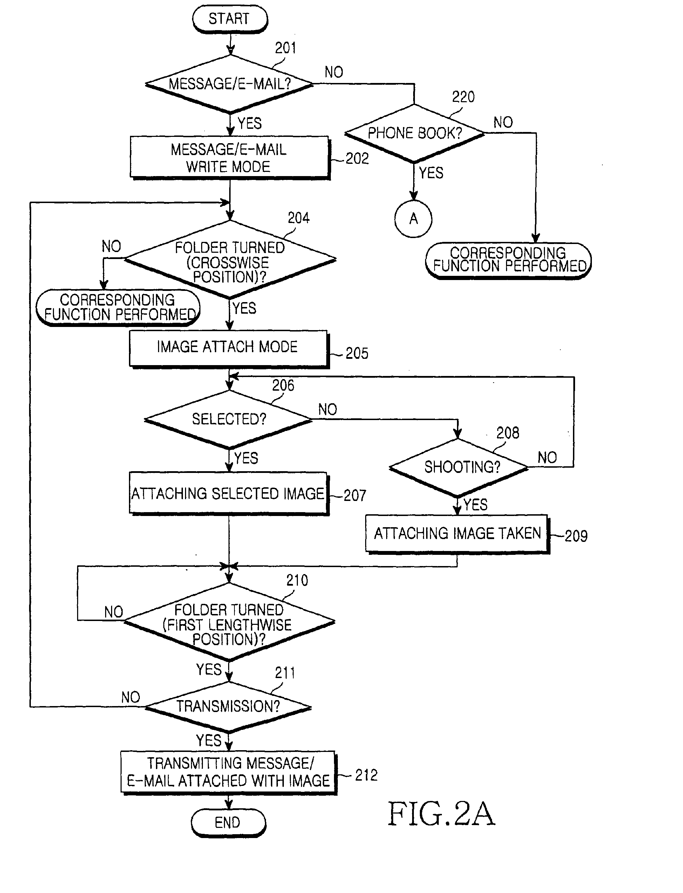

Referring to Fig. 2A, when the folder is in the first lengthwise position, the folder rotating detector unit 170 generates the first position detection signal applied to the microprocessor 110. In this case, if the user selects message/email writing from the selection menu in step 201, the microprocessor 110 controls the wireless terminal to switch to the message/email write mode of step 202, where the user may write a message or email by entering characters.

Where the folder is turned to the second crosswise position, the folder rotating detector unit 170 generates the second position detection signal applied to the microprocessor 110 in step 204 to control the wireless terminal to switch to the image attach mode of step 205. When the user selects one of the images stored in the memory device 130 of the wireless terminal in step 206, the microprocessor 110 proceeds to step 207 to attach the selected image to the message prepared in the previous message write/Email mode. Alternatively, if the user does not attach, but selects the image shoot mode to take a picture in step 205, the microprocessor 110 controls the wireless terminal to take a picture in step 208, then proceeds to step 209 to attach the taken image to the message. In this case, the wireless terminal may be set to display a list of stored images or to be switched directly to the image shoot mode as soon as the folder has been turned to the second crosswise position. Alternatively, the microprocessor 110 may control the terminal to switch to the image shoot mode, if a camera rotation detector (not shown) detects the right position of the camera module unit 140 to take the user's image in the upright position.

Where the folder is turned to the first lengthwise position after attaching the image, the folder rotating detector unit 170 detects the position in step 210 to generate the first position detection signal applied to the microprocessor 110 to control the display 160 to present a selection message asking the user to select transmission or message/email write mode. If the transmission is selected, the microprocessor 110 detects it in step 211, causing the wireless terminal to transmit the message prepared in the message/email write mode of step 202 together with the image attached in the image attach mode in step 212 to a distant party. The distant party may be designated in the message/email write mode or image attach mode or just before transmission. Alternatively, selecting the message/email write mode from the selection message, the microprocessor detects in step 211 to return the wireless terminal to that write mode to resume message writing in step 202.

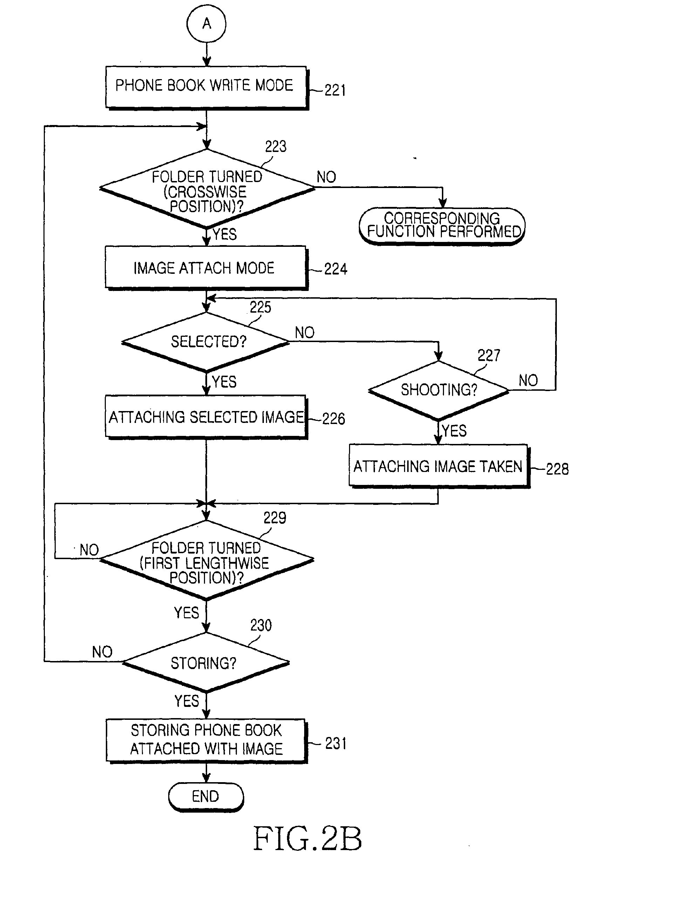

Alternatively, instead of displaying the selection message, the user may set the wireless terminal to carry out the transmission or to enter the phone book mode when the folder returns to the previous rotational position. For example, the user can set the wireless terminal to carry out the transmission or to enter the phone book mode when the folder returns to the first lengthwise position. When entering the phone book mode with the folder rotating detector unit 170 generating the first position detection signal, the microprocessor 110 detects it in step 220, causing the wireless terminal to be switched to the phone book write mode in step 221 as shown in Fig. 2B.

Referring to Fig. 2B, if the folder is turned to the second crosswise position while writing the phone book, the folder rotating detector unit 170 generates the second position detection signal applied to the microprocessor 110 in step 223 to control the wireless terminal to switch to the image attach mode in step 224. The image attach mode may be called photo phone book mode. The microprocessor 110 controls the display to present the list of the images by selecting the image data stored in the memory device 130. If one of the images is selected in step 225, the microprocessor 110 goes to step 226 to attach the selected image. When selecting the image attach mode in step 224, the microprocessor 110 controls the wireless terminal to be switched to the image shoot mode to take a picture in step 227. Then the microprocessor 110 goes to step 228 to attach the image taken. The user may set the wireless terminal to display the list of the image data stored or to enter the image shoot mode once the folder is turned to the second crosswise position by, for example, omitting the step of selecting the image data stored or image shoot mode.

Alternatively, the microprocessor 110 may control the terminal to switch to the image shoot mode, if a camera rotation detector (not shown) detects the right position of the camera module unit 140 to take the user's image in the upright position.

Where the folder is turned to the first lengthwise position after attaching the image in the image attach mode, the folder rotating detector unit 170 generates the first position detection signal applied to the microprocessor 110 in step 229 to control the display 160 to present a selection message for selecting data storing or phone book write mode. If data storing is selected in step 230, the microprocessor 110 goes to step 231 to store the character data entered in the phone book write mode together with the image data attached in the image attach mode. Where the phone book write mode is selected from the selection message in step 230, the microprocessor 110 resumes writing the phone book in step 221. Alternatively, the user may set the wireless terminal to carry out the data storing or to resume the phone book write mode once the folder is turned to the first lengthwise position by omitting, for example, the step of selecting the data storing or the phone book write mode.

The method according to exemplary implementations of the present invention may simplify the attachment of an image to a message by turning the folder to the second crosswise position of the image attach mode.

While the present invention has been shown and described with reference to certain exemplary embodiments thereof, it will be understood by those skilled in the art that various changes in form and details may be made therein without departing the spirit and scope of the invention as defined by the appended claims.

## Claims

1. A method of switching a wireless terminal from a message or email write mode to an image attach mode, the method comprising:
detecting a rotational position of a folder of a wireless terminal in a write mode; and
switching said wireless terminal to an image attach mode when said folder is turned to the position for switching to image attach mode.

2. The method as claimed in claim 1, wherein the switching of said wireless terminal to the image attach mode further comprises:
switching said wireless terminal to an image shoot mode for taking an image when said folder is turned to the position for switching to image attach mode; and
attaching the image taken by the camera in the image shoot mode to said
write mode.

3. The method as claimed in claim 1, wherein the switching of said wireless terminal to the image attach mode further comprises:
displaying a list of images stored in said wireless terminal when said folder is turned to the position for switching to the image attach mode; and
attaching at least one of said list of images to said write mode.

4. The method as claimed in claim 1, further comprising:
displaying a selection menu when said folder is turned from the image attach mode to the previous position;
transmitting a inputted character in said write mode along with the attached image if a transmission mode is selected from said selection menu;
switching said wireless terminal to said write mode if continued writing is selected from said selection menu.

5. The method as claimed in claim 1, further comprising storing said inputted character and attached image when said folder is turned from the image attach mode to the previous position.

6. The method as claimed in claim 1, further comprising:
detecting the rotational position of said folder in at least one of a message / email write mode;
switching said wireless terminal to the image attach mode when said folder is turned to the position for switching to the image attach mode;
attaching the image to the at least one of the message and email in the image attach mode;
displaying a selection menu when said folder is turned to the previous position; and
transmitting at least one of the message and email with the attached image if a transmission mode is selected from said selection menu;
switching said wireless terminal to at least one of the message/E-mail write mode if continued writing is selected from said selection menu.

7. The method as claimed in claim 1, further comprising:
detecting the rotational position of said folder when said folder is turned from a phone book write mode;
switching said wireless terminal to the image attach mode when said folder is turned to the position for switching to the image attach mode;
attaching the image to the phone book in the image attach mode;
displaying a selection menu when said folder is turned to the previous position;
storing the phone book along with the attached image if storing is selected from said selection menu; and
switching said wireless terminal to the phone book write mode and E-mail write mode if continued writing is selected from said selection menu.

8. The method as defined in claim 7, wherein said wireless terminal is switched to photo phone book when said folder is turned to the image attach mode.

9. A wireless terminal comprising:
a folder rotating detector unit for generating a position detection signal; and
a microprocessor for detecting a rotational position of a folder in the message/E-mail write mode, wherein said microprocessor controls a wireless terminal to switch to at least one of the message/E-mail write mode and a image attach mode according to the rotational position of the folder.

10. The wireless terminal as claimed in claim 9, wherein the folder rotating detector unit generates at least one of a first position detection signal and a second position detection signal according to the rotational position of the folder.
